# EUROPÄISCHE PATENTANMELDUNG

(11) **EP 4 328 177 A1**
(43) Veröffentlichungstag der Anmeldung: **28.02.2024**
(21) Anmeldenummer: 22020406.9
(22) Anmeldetag: 22.08.2022
(51) Int. Cl.: C01B 3/04, B01D 53/047, C01B 3/56

(54) **VERMEIDUNG VON NITRIERUNGEN BEIM BETRIEB EINES AMMONIAKSPALTOFENS**

(71) Anmelder: Linde GmbH, 82049 Pullach (DE)
(72) Erfinder: Behrens, Axel, 82049 Pullach (DE); Heinzel, Albrecht, 82049 Pullach (DE); Reinke, Michael, 82049 Pullach (DE); Peschel, Andreas, 82049 Pullach (DE)
(74) Vertreter: Fischer, Werner

(57) **Zusammenfassung**

Die Erfindung betrifft ein Verfahren sowie eine Vorrichtung zur Erzeugung eines Wasserstoff und Stickstoff umfassenden Spaltgases (7) aus einem ammoniakreichen, zu mehr als 50Vol.-% aus Ammoniak bestehenden Einsatz (1), wobei im ammoniakreichen Einsatz (1) enthaltenes Ammoniak in einem Spaltofen (C) mit katalytischer Unterstützung bei einem Spaltdruck von über 5 bar und einer Spalttemperatur von wenigstens 500°C gespalten wird, um das Wasserstoff und Stickstoff umfassende Spaltgas (7) zu erhalten. Kennzeichnend hierbei ist, dass der ammoniakreiche Einsatz (1) einer katalytisch unterstützen Vorspaltung (V) unterworfen wird, bei der ein Teil des im Einsatz (1) enthaltenen Ammoniaks in Wasserstoff und Stickstoff getrennt und ein Ammoniak umfassender Einsatz (5) für den Spaltofen (C) erhalten wird.

## Beschreibung

Die Erfindung betrifft ein Verfahren zur Erzeugung eines Wassersoff und Stickstoff umfassenden Spaltgases aus einem ammoniakreichen, zu mehr als 50Vol.-% aus Ammoniak bestehenden Einsatz, wobei im ammoniakreichen Einsatz enthaltenes Ammoniak in einem Spaltofen mit katalytischer Unterstützung bei einem Druck (Spaltdruck) von über 5bar und einer Temperatur (Spalttemperatur) von wenigstens 500°C gespalten wird, um das Wasserstoff und Stickstoff umfassende Spaltgas zu erhalten.

Weiterhin betrifft die Erfindung eine Vorrichtung, die zur Durchführung des erfindungsgemäßen Verfahrens geeignet ist.

Die Erzeugung von Wasserstoff und Stickstoff durch katalytisch unterstütze Spaltung von Ammoniak ist bekannt und seit vielen Jahren Stand der Technik. Die dabei ablaufende Reaktion

2NH_{3(Gas)} ↔ N₂ + 3H₂

ist endotherm (ΔH=46,2kJ/mol). Die Lage des Gleichgewichts und die Reaktionsgeschwindigkeit hängen stark von Druck und Temperatur sowie von der Art des eingesetzten Katalysators ab.

Insbesondere für große Leistungen können zur Durchführung von Verfahren der gattungsgemäßen Art Spaltöfen eingesetzt werden, die ähnlich aufgebaut sind wie die aus dem Stand der Technik bekannten Dampfreformer. Sie besitzen einen Stahlmantel, der zur Wärmeisolierung mit einer feuerfesten Innenauskleidung versehen ist, die einen brennerbefeuerten Feuerraum umschließt. Im Feuerraum sind mehrere Rohre (sog. Katalysatorrohre) angeordnet, deren innere Oberflächen katalytisch aktiv sind oder die ganz oder zumindest teilweise im Bereich des Feuerraums mit einer Schüttung aus einem Katalysatormaterial oder einer katalytisch aktiven strukturierten Packung gefüllt sind. Das zu spaltende Ammoniak wird in die Katalysatorrohre eingeleitet und dort in einer endothermen Reaktion in ein weitgehend aus Wasserstoff und Stickstoff sowie Ammoniak bestehendes, als Spaltgas bezeichnetes Gasgemisch umgesetzt. Das Spaltgas, das die Katalysatorrohre mit einer Temperatur von typischerweise mehr als 500°C verlässt, wird gegen anzuwärmende Verfahrensströme abgekühlt, ehe es weiteren Behandlungsschritten unterzogen wird, um ein Produkt wie beispielsweise Reinwasserstoff (> 99,9Vol.-% Wasserstoff) zu erhalten, das mit einem Druck von typischerweise mehr als 5bar abgegeben wird.

Damit der erzeugte Wasserstoff ohne oder mit nur geringem Verdichtungsaufwand als Produkt abgegeben werden kann, wird die Ammoniakspaltung zweckmäßigerweise bei Drücken zwischen 20 und 40bar durchgeführt. Dies ist umso einfacher möglich, als das für die Spaltung bestimmte Ammoniak gewöhnlich flüssig zur Verfügung steht, weshalb sein Druck mit nur wenig Energieaufwand erhöht werden kann. Damit unter diesen Bedingungen ein ausreichend hoher, wirtschaftlich sinnvoller Umsetzungsgrad des eingesetzten Ammoniaks erreicht wird, ist es notwendig, die Spaltung bei Temperaturen zwischen ca. 500 und 1000°C zu betreiben.

Problematisch hierbei ist allerdings, dass bereits ein Ammoniakpartialdruck von wenigen Bar bei Spalttemperaturen von mehr als 450°C zur Nitrierung der meisten im Spaltofenbau eingesetzten Stähle führt, die dadurch verspröden und Festigkeit sowie Zähigkeit einbüßen. Zumindest die mit heißem Ammoniak in Berührung kommenden Teile des Spaltofens müssen daher entweder mit größeren Wandstärken oder aus einem teuren, gegen Nitrierung unempfindlichen Material gefertigt sein. Einer Nitrierung kann auch durch eine Absenkung des Ammoniakpartialdrucks begegnet werden, wozu gewöhnlich Dampf als Verdünnungsmedium eingesetzt wird. Dies ist aber ebenfalls mit Kosten verbunden und beeinträchtigt die Wirtschaftlichkeit des Verfahrens.

Aufgabe der vorliegenden Erfindung ist es daher, ein gattungsgemäßes Verfahren sowie eine Vorrichtung zu dessen Durchführung anzugeben, durch die die aufgeführten Nachteile des Standes der Technik überwunden werden.

Die gestellte Aufgabe wird verfahrensseitig erfindungsgemäß dadurch gelöst, dass der ammoniakreiche Einsatz einer katalytisch unterstützen Vorspaltung unterworfen wird, bei der ein Teil des im Einsatz enthaltenen Ammoniaks in Wasserstoff und Stickstoff getrennt und ein Ammoniak umfassender Einsatz für den Spaltofen (Spaltofeneinsatz) erhalten wird.

Aufgrund der Vorspaltung weist der Spaltofeneinsatz einen geringeren Ammoniakgehalt auf als der ammoniakreiche Einsatz. Bei sonst gleichen Bedingungen wird daher auch ohne Zumischung eines Verdünnungsmediums eine Reduzierung des Ammoniakpartialdrucks im Spaltofen im Vergleich zu einer direkten Zuführung des ammoniakreichen Einsatzes erreicht. Sinnvollerweise wird bei der katalytisch unterstützten Vorspaltung so viel Ammoniak in Wasserstoff und Stickstoff getrennt, dass der Spaltofeneinsatz bei einem so niedrigen Ammoniakpartialdruck umgesetzt werden kann, dass die mit Ammoniak in Berührung kommenden Teile des Spaltofens auch dann nicht oder nur geringfügig nitriert werden, wenn sie aus einem konventionellen, gegen Nitrierung empfindlichen Material bestehen.

Die katalytisch unterstützte Vorspaltung wird bevorzugt in einem Vorspaltschritt durchgeführt, kann aber auch in mehreren aufeinander folgenden Vorspaltschritten durchgeführt werden, wobei jedem Vorspaltschritt ein Ammoniak enthaltender Stoffstrom zugeführt wird.

Vorzugsweise wird jedem Vorspaltschritt der Ammoniak enthaltende Stoffstrom mit einem Druck, der um die bis zum Eintritt in den Spaltofen anfallenden Leitungsverluste den im Spaltofen herrschenden Spaltdruck übersteigt. Besonders bevorzugt wird jeder Vorspaltschritt mit einer Vorspalttemperatur von weniger als 600°C durchgeführt.

Einem Vorspaltschritt wird der Ammoniak enthaltende Stoffstrom mit einer möglichst hohen Eintrittstemperatur zugeführt, die gleichzeitig so niedrig ist, dass bei dem herrschenden Vorspaltdruck die mit Ammoniak in Berührung kommenden Teile des in diesem Vorspaltschritt eingesetzten Vorspaltreaktors nicht oder nur geringfügig nitriert werden. Jeder Vorspaltschritt kann mit, d.h. allotherm, oder ohne Wärmezufuhr, d.h. adiabat durchgeführt werden.

Zur Durchführung eines Vorspaltschritts kann beispielsweise ein Wärmtauscher eingesetzt werden, der gleichzeitig auch zur Anwärmung des zu spaltenden Ammoniaks dient. In einem derartigen Wärmetauscher wird das Ammoniak etwa durch Rohre geführt und dabei in indirektem Wärmetausch mit einem an den Rohraußenflächen entlanggeführten Wärmeträger angewärmt. Der für die Ammoniakspaltung erforderliche Katalysator ist zweckmäßigerweise in einem oder mehreren der Rohre des Wärmetauschers angeordnet, so dass der Vorspaltschritt unter Wärmezufuhr durchgeführt wird.

Möglich ist aber auch der Einsatz eines adiabaten Vorspaltreaktors in einem Vorspaltschritt, wobei die für die Spaltreaktion benötigte Energie dem diesem Vorspaltschritt zugeführten Stoffstrom entzogen wird. Zumindest vor jedem adiabat durchgeführten Vorspaltschritt wird der in diesem Schritt zu behandelnde Stoffstrom auf eine Temperatur von mehr als 300°C angewärmt.

Zweckmäßigerweise wird die katalytisch unterstütze Vorspaltung unter Nutzung von Abwärme durchgeführt. Unter Abwärme ist dabei Wärme zu verstehen, die im Verfahren selbst als Nebenprodukt anfällt und die nach dem Stand der Technik entweder ohne wirtschaftlichen Nutzen in die Umwelt entlassen oder innerhalb oder außerhalb des Verfahrens beispielsweise zur Anwärmung von Stoffen verwendet wird.

Die Temperatur, bei der ein Vorspaltschritt durchgeführt wird, richtet sich in erster Linie nach dem eingesetzten Katalysator sowie der Temperatur und dem Wärmeinhalt der zur Verfügung stehenden Abwärme. So ist es beispielsweise möglich, schon bei Spalttemperaturen von wenig mehr als 300°C und unter Einsatz eines teuren, Ruthenium enthaltenden Katalysators hohe Ammoniakumsätze zu generieren, während etwa ein preislich wesentlich günstigerer Katalysator auf Nickel-, Kobalt-, Eisen- oder Mischmetall-Basis erst bei Temperaturen von deutlich über 500°C ähnlich gute Ergebnisse liefert.

Wird die Vorspaltung in mehr als einem Vorspaltschritt durchgeführt, können in den Vorspaltschritten die gleichen oder unterschiedliche Katalysatoren eingesetzt werden. Vorzugsweise werden in zumindest zwei unmittelbar aufeinanderfolgenden Vorspaltschritten unterschiedliche, auf unterschiedlichen Temperaurniveaus betreibbare Katalysatoren verwendet, so dass für die Bereitstellung der in diesen Vorspaltschritten benötigten Wärmemengen Abwärmen unterschiedlicher Qualität nutzbar sind.

Zur Erreichung der für einen Vorspaltschritt erforderlichen Temperatur sieht eine Ausgestaltung des erfindungsgemäßen Verfahrens vor, Wärme durch regenerativ erzeugten elektrischen Strom zu gewinnen und alternativ oder zusätzlich zur Abwärme im Vorspaltschritt einzusetzen. Der Einsatz des regenerativ erzeugten elektrischen Stroms kann von seiner Verfügbarkeit und/oder seinem Preis abhängig gemacht werden. So kann etwa auf den Stromeinsatz verzichtet werden, wenn die zur Verfügung stehende Strommenge einen vorgegebenen Grenzwert unterschreitet oder der Strompreis über einem Maximalwert liegt. Vorzugsweise wird der elektrische Strom dazu verwendet, um einen Vorspaltschritt bei einer höheren Spalttemperatur durchzuführen, als dies allein durch die Nutzung von Abwärme möglich wäre.

Das erfindungsgemäße Verfahren weiterbildend wird vorgeschlagen, die Vorspaltung des ammoniakreichen Einsatzes so durchzuführen, dass ein erster und ein zweiter im Ammoniakgehalt reduzierter Stoffstrom (Vorspaltstrom) entstehen, von denen nur der erste Vorspaltstrom als Spaltofeneinsatz weitergeführt wird, während der zweite Vorspaltstrom einem durch das heiß aus dem Spaltofen austretende Spaltgas beheizten Gas-Heated Reformer (GHR) zugeführt wird, um dort mit katalytischer Unterstützung in ein Spaltgas (GHR-Spaltgas) umgesetzt zu werden. Vorzugsweise wird der GHR auf dem gleichen Spaltdruckniveau betrieben wie der Spaltofen, so dass das im Spaltofen erhaltene Spaltgas mit dem GHR-Spaltgas ohne wesentlichen Energieeinsatz zu einem Spaltgasstrom zusammengeführt werden kann.

Zum Erhalt des ersten und des zweiten Vorspaltstroms kann der ammoniakreiche Einsatz in wenigstens einem Vorspaltschritt zu einem im Ammoniakgehalt reduzierten Stoffstrom umgesetzt werden, der nachfolgend in einen ersten und einen zweiten im Ammoniakgehalt reduzierten Stoffstrom getrennt wird, die entweder den ersten und den zweiten Vorspaltstrom bilden oder von denen zumindest einer durch wenigstens einen weiteren Vorspaltschritt zu einem Vorspaltstrom umgesetzt wird. Möglich ist es aber auch, den ammoniakreichen Einsatz in einen ersten und einen zweiten ammoniakreichen Stoffstrom zu trennen, die anschließend unabhängig voneinander durch einen oder mehrere Vorspaltschritte behandelt werden, um den ersten und den zweiten Vorspaltstrom zu erhalten.

Gewöhnlich wird das erhaltene Spaltgas, das neben Wasserstoff und Stickstoff auch nicht umgesetztes Ammoniak enthält, unter Einsatz eines Druckwechseladsorbers (DWA) zu einem Produkt aufgereinigt, wobei ein wasserstoffreiches DWA-Restgas anfällt. Um den Ammoniakpartialdruck im Spaltofen weiter zu reduzieren und um die Wasserstoffausbeute zu erhöhen, sieht eine Ausgestaltung des erfindungsgemäßen Verfahrens vor, zumindest einen Teil des DWA-Restgases dem Spaltofeneinsatz zuzumischen.

Möglich ist es auch, den Ammoniakpartialdruck durch die Zumischung von Dampf zum Spaltofeneinsatz zu vermindern, wodurch gleichzeitig die Wärmeübertagung im Spaltofen verbessert wird.

Um die Nitrierungsgefahr weiter zu reduzieren, wird außerdem vorgeschlagen, zur Durchführung des erfindungsgemäßen Verfahrens einen Spaltofen einzusetzen, dessen mit heißem Ammoniak in Berührung kommende Teile aus einem gegenüber Nitrierung unempfindlichen Material bestehen oder mit einem derartigen Material beschichtet sind. Beispiele für gegenüber Nitrierung unempfindlichen Materialien sind Oxide wie z.B. Al₂O₃, katalytische wirkende, die Ammoniakspaltung unterstützende Stoffe wie Nickel, Kobalt und Ruthenium, Keramiken und Edelstähle mit hohem Nickelgehalt.

Weiterhin betrifft die Erfindung eine Vorrichtung zur Erzeugung eines Wasserstoff und Stickstoff umfassenden Spaltgases aus einem ammoniakreichen, zu mehr als 50Vol.-% aus Ammoniak bestehenden Einsatz, mit einem Spaltofen, der zur katalytisch unterstützten Spaltung von Ammoniak bei einem Spaltdruck von über 5 bar und einer Spalttemperatur von wenigstens 500°C unter Erhalt des Wasserstoff und Stickstoff umfassenden Spaltgases geeignet ist.

Vorrichtungsseitig wird die gestellte Aufgabe erfindungsgemäß dadurch gelöst, dass stromaufwärts des Spaltofens ein Vorspaltreaktor angeordnet ist, in dem der ammoniakreiche Einsatz einer katalytisch unterstützen Vorspaltung unterworfen werden kann, um einen Teil des enthaltenen Ammoniaks in Wasserstoff und Stickstoff zu trennen und einen Ammoniak umfassenden Spaltofeneinsatz zu erhalten.

Vorzugsweise ist der Vorspaltreaktor mit genau einer Vorspaltstufe ausgeführt, die ein die Spaltung von Ammoniak unterstützendes Katalysatormaterial enthält. Er kann aber auch mehrere Vorspaltstufen umfassen, wobei zwei seriell angeordnete, unmittelbar aufeinander folgende Vorspaltstufen das gleiche oder unterschiedliches Katalysatormaterial enthalten. Jede Vorspaltstufe des Vorspaltreaktors ist zur Ausführung eines Vorspaltschritts geeignet.

Der Vorspaltreaktor kann zumindest eine zur Ausführung eines adiabaten Vorspaltschritts geeignete Vorspaltstufe (adiabate Vorspaltstufe) umfassen, oder wenigstens eine Vorspaltstufe, mit der ein allothermer Vorspaltschritt möglich ist (allotherme Vorspaltstufe). Zweckmäßigerweise sind sämtliche Vorspaltstufen des Vorspaltreaktors entweder adiabate oder allotherme Vorspaltstufen. Sinnvollerweise ist zumindest stromaufwärts jeder adiabaten Vorspaltstufe eine Anwärmeinrichtung angeordnet, mit der das zu spaltenden Ammoniak auf eine Temperatur von mehr als 300°C anwärmbar ist.

Weiterhin kann der Vorspaltreaktor mit dem Spaltofen und einem GHR so verbunden sein, dass dem Vorspaltreaktor ein erster Vorspaltstrom zur Weiterführung als Spaltofeneinsatz sowie ein zweiter Vorspaltstrom entnehmbar ist, der dem durch heißes Spaltgas aus dem Spaltofen beheizbaren GHR zugeführt werden kann, um dort mit katalytischer Unterstützung in ein Wasserstoff und Stickstoff umfassendes Spaltgas (GHR-Spaltgas) umgesetzt zu werden. Vorzugsweise ist der GHR auf dem gleichen Spaltdruckniveau betreibbar wie der Spaltofen, so dass das im Spaltofen erhaltene Spaltgas mit dem GHR-Spaltgas ohne wesentlichen Energieeinsatz zu einem Spaltgasstrom zusammengeführt werden kann.

Damit der Vorspaltreaktor in der Lage ist, einen ersten und einen zweiten Vorspaltstrom bereitzustellen, umfasst er neben zumindest einer Vorspaltstufe auch einen Strömungsteiler, durch den der in der zumindest einen Vorspaltstufe aus dem ammoniakreichen Einsatz erhältliche, im Ammoniakgehalt reduzierte Stoffstrom in einen ersten und einen zweiten im Ammoniakgehalt reduzierte Stoffstrom geteilt werden kann, wobei der Strömungsteiler mit dem Spaltofen und dem GHR so verbunden ist, dass der erste im Ammoniakgehalt reduzierte Stoffstrom als erster Vorspaltstrom und der zweite im Ammoniakgehalt reduzierte Stoffstrom als zweiter Vorspaltstrom weiterleitbar ist. Möglich ist es aber auch, dass in wenigstens einem der zwei durch den Strömungsteiler definierten Strömungspfade zumindest eine Vorspaltstufe angeordnet ist, über die aus dem in diesem Strömungspfad geführten im Ammoniakgehalt reduzierten Stoffstrom ein Vorspaltstrom erhältlich ist. Weiterhin ist es möglich, dass der Strömungsteiler stromaufwärts von sämtlichen Vorspaltstufen des Vorspaltreaktors angeordnet ist, so dass der ammoniakreiche Einsatz in einen ersten und einen zweiten ammoniakreichen Stoffstrom trennbar ist, wobei in jedem der zwei durch den Strömungsteiler definierten Strömungspfade zumindest eine Vorspaltstufe angeordnet ist, über die aus jeweils einem der ammoniakreichen Stoffströme ein Vorspaltstrom erhalten werden kann.

Vorteilhaft kann die erfindungsgemäße Vorrichtung eine zur Anwärmung des zu spaltenden Ammoniaks dienende Anwärmeinrichtung aufweisen, die als allotherme Vorspaltstufe ausgeführt ist. In derartigen Anwärmeinrichtungen wird der ammoniakreiche Einsatz gewöhnlich durch Rohre geführt und dabei in indirektem Wärmetausch mit einem an den Rohraußenflächen entlanggeführten Wärmeträger angewärmt. Das für die Ammoniakvorspaltung erforderliche Katalysatormaterial ist zweckmäßigerweise in einem oder mehreren der Rohre der Anwärmeinrichtung angeordnet, so dass der Vorspaltschritt unter Wärmezufuhr durchgeführt werden kann.

In einer bevorzugten Ausgestaltung umfasst die erfindungsgemäße Vorrichtung zumindest eine elektrischen Heizeinrichtung, über die dem in einer Vorspaltstufe umzusetzenden Ammoniak thermische Energie zugeführt werden kann.

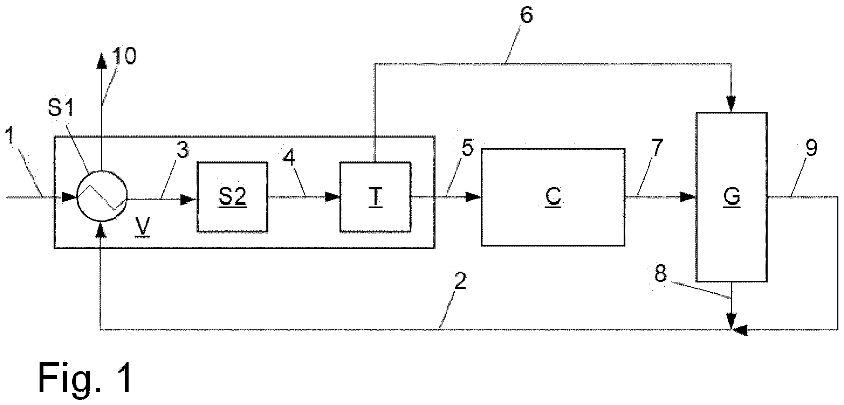

Im Folgenden soll die Erfindung anhand eines in der Figur 1 schematisch dargestellten Ausführungsbeispiels näher erläutert werden.

Die Figur 1 zeigt die Herstellung eines weitgehend aus Wasserstoff und Stickstoff bestehenden Spaltgases aus Ammoniak unter Einsatz eines Vorspaltreaktors.

Über Leitung 1 wird ein gasförmiger Einsatz, der der zu mehr als 50Vol.-% aus Ammoniak besteht, mit einem Druck von mehr als 20 bar dem Vorspaltreaktor V zugeführt, wo er in der ersten Vorspaltstufe S1, die ähnlich aufgebaut ist wie ein Wärmetauscher, zunächst gegen heißes Spaltgas 2 auf eine Temperatur von mehr als 300°C angewärmt und mit katalytischer Unterstützung in einer allotherm geführten Reaktion umgesetzt wird, bei der ein Teil des im Einsatz 1 enthaltenen Ammoniaks in Wasserstoff und Stickstoff gespalten wird und ein erster im Ammoniakgehalt reduzierter Stoffstrom 3 entsteht. Ebenfalls mit katalytischer Unterstützung wird der erste im Ammoniakgehalt reduzierte Stoffstrom 3 in der zweiten Vorspaltstufe S2 adiabat umgesetzt, wobei ein weiterer Teil des im Einsatz enthaltenen Ammoniaks in Wasserstoff und Stickstoff gespalten wird und ein zweiter im Ammoniakgehalt reduzierten Stoffstrom 4 entsteht, der anschließend im Strömungsteiler T kontrolliert in einen ersten 5 und einen zweiten Vorspaltstrom 6 geteilt wird. Der erste Vorspaltstrom 5, der einem deutlich geringeren Ammoniakgehalt als der Einsatz 1 besitzt, wird als Spaltofeneinsatz dem Spaltofen C zugeführt, um bei einem Spaltdruck zwischen 20 und 40 bar und einer Spalttemperatur zwischen 500 und 1000°C weiters Ammoniak in Wasserstoff und Stickstoff zu spalten und das Spaltgas 7 zu erhalten. Durch die Vorspaltung ist der Ammoniakpartialdruck im Spaltofen C so gering, dass es zu keiner oder nur zu einer geringfügigen Nitrierung des Spaltofenmaterials kommt.

Die Wärme des Spaltgases 7 wird im Gas-Heated Reformer G dazu genutzt, im zweiten Vorspaltstrom 6 enthaltenes Ammoniak mit katalytischer Unterstützung in Wasserstoff und Stickstoff zu spalten, wobei das GHR-Spaltgas 8 erhalten wird. Der Gas-Heated Reformer G wird mit einem Spaltdruck betrieben, der im Wesentlichen dem Spaltdruck des Spaltofens C entspricht, so dass das GHR-Spaltgase 8 mit dem abgekühlt aus dem Gas-Heated Reformer G strömenden Spaltgas 9 ohne großen Energieaufwand zu dem überwiegend aus Wasserstoff und Stickstoff bestehenden Spaltgasstrom 2 vereinigt werden kann, der nach Abkühlung in der ersten Vorspaltstufe S1 über Leitung 10 weitergeführt wird, um beispielsweise unter Nutzung eines Druckwechseladsorbers (nicht dargestellt) zu einem Produkt aufgereinigt zu werden.

## Patentansprüche

1. Verfahren zur Erzeugung eines Wasserstoff und Stickstoff umfassenden Spaltgases (7) aus einem ammoniakreichen, zu mehr als 50Vol.-% aus Ammoniak bestehenden Einsatz (1), wobei im ammoniakreichen Einsatz (1) enthaltenes Ammoniak in einem Spaltofen (C) mit katalytischer Unterstützung bei einem Druck (Spaltdruck) von über 5bar und einer Temperatur (Spalttemperatur) von wenigstens 500°C gespalten wird, um das Wasserstoff und Stickstoff umfassende Spaltgas (7) zu erhalten, **dadurch gekennzeichnet, dass** der ammoniakreiche Einsatz (1) einer katalytisch unterstützen Vorspaltung (V) unterworfen wird, bei der ein Teil des im Einsatz (1) enthaltenen Ammoniaks in Wasserstoff und Stickstoff getrennt und ein Ammoniak umfassender Einsatz (5) für den Spaltofen (C) (Spaltofeneinsatz) erhalten wird.

2. Verfahren nach Anspruch 1, **dadurch gekennzeichnet, dass** die katalytisch unterstützte Vorspaltung (V) in einem Vorspaltschritt oder in mehreren aufeinander folgenden Vorspaltschritten (S1, S2) durchgeführt wird, wobei jedem Vorspaltschritt (S1, S2) ein Ammoniak enthaltender Stoffstrom (1, 3) zugeführt wird.

3. Verfahren nach Anspruch 2, **dadurch gekennzeichnet, dass** jedem Vorspaltschritt (S1, S2) der Ammoniak enthaltende Stoffstrom (1, 3) mit einem Druck, der um die bis zum Eintritt in den Spaltofen (C) anfallenden Leitungsverluste den im Spaltofen (C) herrschenden Spaltdruck übersteigt, wobei jeder Vorspaltschritt (S1, S2) mit einer Vorspalttemperatur von weniger als 600°C durchgeführt wird.

4. Verfahren nach einem der Ansprüche 2 oder 3, **dadurch gekennzeichnet, dass** ein Vorspaltschritt allotherm (S1) oder adiabat (S1) durchgeführt wird.

5. Verfahren nach einem der Ansprüche 1 bis 4, **dadurch gekennzeichnet, dass** die Vorspaltung (C) unter Nutzung von Abwärme durchgeführt wird.

6. Verfahren nach einem der Anspruche 1 bis 5, **dadurch gekennzeichnet**, durch Wärme durch regenerativ erzeugten elektrischen Strom gewonnen und alternativ oder zusätzlich zu Abwärme in einem Vorspaltschritt eingesetzt wird.

7. Verfahren nach einem der Ansprüche 1 bis 6, **dadurch gekennzeichnet, dass** die Vorspaltung (V) des ammoniakreichen Einsatzes (1) so durchzuführen, dass ein erster (5) und ein zweiter im Ammoniakgehalt reduzierter Stoffstrom (Vorspaltstrom) (6) entstehen, von denen nur der erste Vorspaltstrom (5) als Spaltofeneinsatz weitergeführt wird, während der zweite Vorspaltstrom (6) einem durch das heiß aus dem Spaltofen (C) austretende Spaltgas (7) beheizten Gas-Heated Reformer (GHR) (G) zugeführt wird, um dort mit katalytischer Unterstützung in ein Spaltgas (GHR-Spaltgas) (8) umgesetzt zu werden.

8. Vorrichtung zur Erzeugung eines Wasserstoff und Stickstoff umfassenden Spaltgases (7) aus einem ammoniakreichen, zu mehr als 50Vol.-% aus Ammoniak bestehenden Einsatz (1), mit einem Spaltofen (C), der zur katalytisch unterstützten Spaltung von Ammoniak bei einem Spaltdruck von über 5 bar und einer Spalttemperatur von wenigstens 500°C unter Erhalt des Wasserstoff und Stickstoff umfassenden Spaltgases (7) geeignet ist, **dadurch gekennzeichnet, dass** stromaufwärts des Spaltofens (C) ein Vorspaltreaktor (V) angeordnet ist, in dem der ammoniakreiche Einsatz(1) einer katalytisch unterstützen Vorspaltung (S1 S2) unterworfen werden kann, um einen Teil des enthaltenen Ammoniaks in Wasserstoff und Stickstoff zu trennen und einen Ammoniak umfassenden Spaltofeneinsatz (5) zu erhalten.

9. Vorrichtung nach Anspruch 8, **dadurch gekennzeichnet, dass** der Vorspaltreaktor (V) genau eine oder mehrere Vorspaltstufen umfasst, wobei zwei seriell angeordnete, unmittelbar aufeinander folgende Vorspaltstufen das gleiche oder unterschiedliches Katalysatormaterial enthalten.

10. Vorrichtung nach Anspruch 9, **dadurch gekennzeichnet, dass** sämtliche Vorspaltstufen (S1, S2) des Vorspaltreaktors (V) entweder adiabate oder allotherme Vorspaltstufen sind.

11. Vorrichtung nach einem der Ansprüche 8 bis 10, **dadurch gekennzeichnet, dass** der Vorspaltreaktor (V) mit dem Spaltofen (C) und einem GHR (G) so verbunden ist, dass dem Vorspaltreaktor (V) ein erster Vorspaltstrom (5) zur Weiterführung als Spaltofeneinsatz sowie ein zweiter Vorspaltstrom (6) entnehmbar ist, der dem durch heißes Spaltgas (7) aus dem Spaltofen (C) beheizbaren GHR (G) zugeführt werden kann, um dort mit katalytischer Unterstützung in ein Wasserstoff und Stickstoff umfassendes GHR-Spaltgas (8) umgesetzt zu werden.

12. Vorrichtung nach einem der Ansprüche 8 bis 11, **dadurch gekennzeichnet, dass** sie eine zur Anwärmung des zu spaltenden Ammoniaks dienende Anwärmeinrichtung aufweist, die als allotherme Vorspaltstufe (S1) ausgeführt ist.
